# EUROPEAN PATENT APPLICATION

(11) **EP 3 385 543 A1**
(43) Date of publication of application: **10.10.2018**
(21) Application number: 17164579.9
(22) Date of filing: 03.04.2017
(51) Int. Cl.: F16B 5/00, F16B 5/06, F16B 12/10

(54) **MODULAR COUPLING ASSEMBLY**

(71) Applicant: ECO-oh! Innovation, 2430 Laakdal (BE)
(72) Inventor: Verhaert, Koen, 2430 Laakdal (BE)
(74) Representative: BiiP cvba

(57) **Abstract**

The present invention discloses a modular coupling assembly (100) comprising a spindle shaped coupler (110) having a first outwardly directed flange (112) extended circumferentially, a second outwardly directed flange (114) and a connecting portion extending axially between first and second flange (112,114). The coupling assembly (100) further comprises a first hollow coupling rod (120) and a second hollow coupling rod (130), each having a connecting end and a cavity end. Each of the coupling rod (120,130) comprises an upper section and a lower section. The upper sections and the lower sections of each of the coupling rods comprises a groove adjacent the connecting end. The coupling rods (120,130) further comprises a locking mechanism for locking the upper sections on to the lower sections such that a combined groove is formed in each of coupling rod (120,130) adjacent an opening at the connecting end thereof. The combined groove formed in the first coupling rod (120) engages the first flange (112) and the combined groove formed in the second coupling rod (130) engages the second flange (114) of the spindle shaped coupler (110). The cavity end of each of the coupling rod (120,130) comprises a connecting mechanism for connection with an object to be coupled using the coupling assembly (100). In operation, the first flange (112) is placed over the groove of lower section of one of the coupling rods (120) and the second flange (114) is placed over the groove of the lower section of the other coupling rod (130). Thereafter, the upper section of each of the coupling rod (120,130) is placed over the corresponding lower section such that when locked using the locking mechanism, the first coupling rod (120) is flexibly coupled to the second coupling rod (130) and a limited relative movement in a direction perpendicular to a longitudinal axis (Li) of the coupling assembly (100), is possible there between.

## Description

### Field of Invention

The present invention relates generally to a coupling assembly. More particularly, the present invention relates to a modular coupling assembly that allows a limited misalignment between the objects to be couple.

### Background of the Invention

Over the last few decades there has been considerable efforts towards the development of a variety of shapes and sizes of furniture in order to provide better comfort, decoration and ease of handling. Also, the Consumers generally appreciate the furniture that can withstand the wear of everyday use without requiring much attention. Further due to space considerations, there is a significant problem faced in movement of traditional furniture such as including couches, chairs, benches etc, into tight areas of a home or apartment complex, including, for example, basements, narrow hallways, or upstairs rooms.

To overcome such problems, recently the trend seems to be shifting towards furniture modulation. Modular furniture is useful in a variety of settings. Consumers eager to have options for arranging furniture in multiple ways can purchase modular furniture which will allow them to set up furniture assemblies in one of a plurality of different of manners. Further, the modular nature of furniture helps in overcoming the space problem as it is convenient to assemble the furniture on site thereby providing convenience for transport and set up.

However, traditionally, the modular furniture were mainly assembled using various kind of furniture couplers such as by using nails, staples, epoxy or some other type of fasteners including various pins, angle irons, various profiles and pusher edges. Such an assembling of the furniture has various shortcomings. Some of these include difficulty to disassemble the furniture when coupled using these fixed kind of coupling mechanism. This presents a challenge for consumers, especially when the furniture needs to be transported from one location to another. Further, When moved on rough and / or irregular surfaces, an impact pressure is created on such couplers which in turn either damages the couplers or otherwise in some instances may transmit such an impact on the furniture thereby causing damage or destruction of the furniture.

There have been significant efforts to resolve the abovementioned problems which resulted in development of various kind of coupling mechanisms. One such coupling mechanism is disclosed in EP2278170A1 in which a screw and nut kind of coupling mechanism is disclosed. The coupling mechanism included an elastically deformable protrusion to allow insertion of the screw through the objects to be coupled. Once inserted screw was locked using a nut. The reference however, is a rather fixed kind of coupling mechanism and therefore was not preferred.

Further, some flexible coupling mechanisms were also developed for connecting multiple pieces of furniture. One such flexible coupling mechanism is disclosed in US patent 5501541. The patent discloses an axially aligning bore configured within the objects to be connected. Further, the patent discloses insertion of a flexible tube within the axial bore thereby aligning the objects through the flexible tube. Thereafter, a hanger bolt is threaded into each end of the flexible tube there by connecting the two objects. The tube being deformable in nature avoids any impact force arising to be transferred on the object.

Another mechanism is disclosed in Chinese patent publication 204040346. The publication discloses a coupling mechanism for connecting two or more pieces. The coupling mechanism included two connecting rods connected through an eccentric nut thereby allowing an angular movement between the objects to be connected.

The disclosed flexible coupling mechanisms provided some angular flexibility or bending ability or motion between the connecting ends but did not completely solved the problem where there impact force is in a direction parallel or perpendicular to the longitudinal axis.

Accordingly, there is a need in the art for an improved coupling mechanism that may connect multiple pieces of an object which while being flexible also provides a capability of misalignment between the coupled pieces, thereby making the furniture formed versatile, durable and relatively maintenance free.

### Summary of the Invention

In one aspect of the present disclosure, a modular coupling assembly for flexibly coupling two objects is provided. The coupling assembly includes a spindle shaped coupler having a first outwardly directed flange radially extended towards a second outwardly directed flange through a central connecting portion. The coupling assembly further includes a first hollow coupling rod and a second hollow coupling rod, each having a connecting end and a cavity end. The first coupling rod is connectable to the first flange of the spindle shaped coupler at its connecting end. The second coupling rod is connectable to the second flange of the spindle shaped coupler at its connecting end. When connected to the spindle shaped coupler, the first coupling rod and the second coupling rod are relatively flexibly and moveable in a direction perpendicular to a longitudinal axis of the coupling assembly. The cavity end of each of the coupling rods comprises one or more connecting mechanisms for enabling a connection with one of the objects to be coupled.

Preferably, the first flange and the second flange are of generally similar dimensions and have a diameter greater than a diameter of the central connecting portion.

Generally, each of the hollow coupling rod are of generally tubular having similar dimensions and comprises an upper section, a lower section and a locking mechanism for locking the upper section on to the lower section.

Further, the upper section and the lower section of each of the coupling rods comprises a horizontal groove across its circumference adjacent the connecting end such that a combined groove is formed adjacent an opening at the connection end when the upper section is locked onto the lower section.

Potentially, the opening at the connecting end of the coupling rods has a diameter greater than a diameter of the central connecting portion of the spindle shaped coupler.

Further potentially, the diameter of the opening at the connecting end of coupling rods is lesser than the diameter of the flanges of the spindle shaped coupler.

Accordingly, the combined groove formed on each of the coupling rod is configured to lockingly engage one of the flanges of the spindle shaped coupler.

Potentially, the locking mechanism for locking the upper section on to the lower section is a snap-fit locking assembly.

Preferably, the connection mechanism comprises a threaded nut bolt assembly and a corresponding cavity within the objects to be coupled.

Alternatively, the connection mechanism may selected from one of but not limited to various connection mechanisms such as snap-fit lock mechanism, notch based connecting mechanism, and various kind of fastener based connection mechanisms.

Optionally, the coupling assembly is made of a rigid polymeric material.

Alternatively, the coupling assembly is made of a metal or any other material that is suitable for making the coupling assembly detachable and reusable

In another aspect of the present disclosure, a method for installing a modular coupling assembly for coupling two or more objects is provided. The method comprises placing the first flange of the spindle shaped coupler in between the upper section and the lower section of the first coupling rod. Additionally, the method comprises locking the upper section onto the lower section of the first coupling rod using a first locking mechanism such that a first combined groove flexibly and lockingly engages the first flange of the coupler. The method further comprises placing the second flange of the spindle shaped coupler between the upper section and the lower section of the second coupling rod. Additionally, the method comprises locking the lower section and upper section of the second coupling rod using a second locking mechanism such that a second combined groove lockingly engages the second flange of the coupler.

Potentially, the method comprises connecting the first coupling rod to one of the objects to be coupled using a first connecting mechanism.

Further potentially, the method comprises connecting the second coupling rod to the other object to be coupled using a second connecting mechanism.

Generally, the first coupling rod and second coupling rod are relatively and limited movable in a direction perpendicular to a longitudinal axis of the coupling assembly which in turn provides a flexible connection between the objects coupled using the modular coupling assembly.

The details of one or more implementations are set forth in the accompanying drawings and the description below. Other aspects, features and advantages of the subject matter disclosed herein will be apparent from the description, the drawings, and the claims.

### Brief Description of drawings

FIG. 1a illustrates a schematic view of a modular coupling assembly, in accordance with one preferred embodiment of the present disclosure;
FIG. 1b illustrates a schematic view of a modular coupling assembly, in accordance with an embodiment of the present disclosure
FIG. 2a illustrates a cross-sectional view of the modular coupling assembly, in accordance with the preferred embodiment of the present disclosure;
FIG. 2b illustrates a perspective view of the modular coupling assembly, in accordance with the preferred embodiment of the present disclosure;
FIG. 3 illustrates a front view of the spindle shaped coupler, in accordance with one embodiment of the present disclosure;
FIG. 4a illustrates a perspective and cross sectional view of the coupling rods connected using the spindle shaped coupler, in accordance with an embodiment of the present disclosure;
FIG. 4b illustrates a cross sectional view of the coupling rods connected using the spindle shaped coupler, in accordance with an embodiment of the present disclosure;
Fig. 5a illustrates a perspective and cross-sectional view of the coupling rods connected using the spindle shaped coupler in a misaligned position, in accordance with an embodiment of the present disclosure;
Fig. 5b illustrates a cross-sectional view of the coupling rods connected using the spindle shaped coupler in a misaligned position, in accordance with an embodiment of the present disclosure;
FIG. 6 depicts a flowchart illustrating the steps for installing the modular coupling assembly, in accordance with an embodiment of the present disclosure;
FIG. 7 depicts a flowchart illustrating the steps for engaging a first flange in within a first combined groove of the first coupling rod, in accordance with an embodiment of the present disclosure;
FIG. 8 depicts a flowchart illustrating the steps for engaging a second flange in within a second combined groove of the second coupling rod, in accordance with an embodiment of the present disclosure

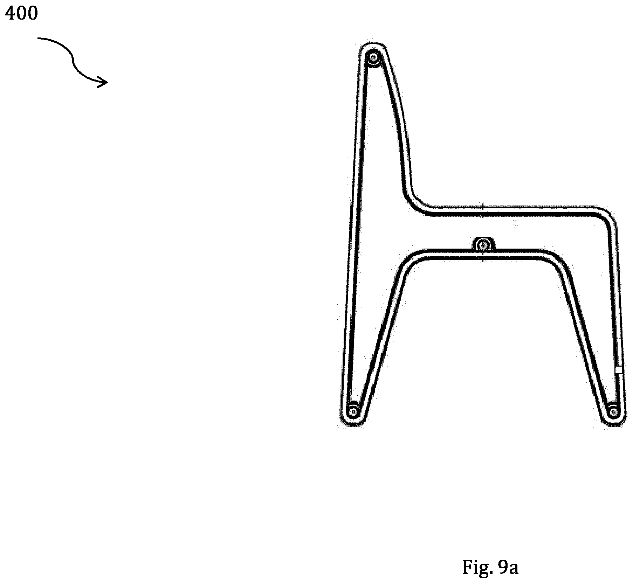

FIG. 9a illustrates a perspective view of three pieces of a chair coupled using multiple modular coupling assemblies, in accordance with an embodiment of the present disclosure; and

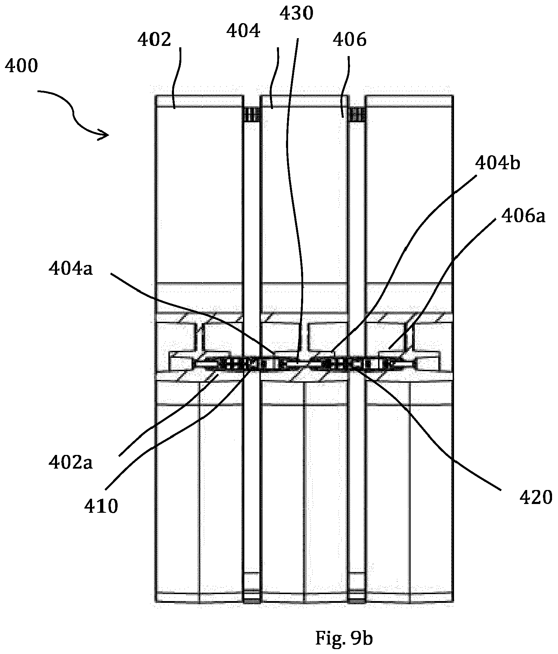

FIG. 9b illustrates a top view of three pieces of a chair coupled using multiple modular coupling assemblies, in accordance with an embodiment of the present disclosure;

### Detailed Description of the Preferred Embodiments

The present application discloses a modular coupling assembly for coupling two or more pieces of an object such as furniture for example, planks of chair, benches, or the like. The coupling assembly while being modular, allows the possibility of a misalignment between the pieces of the coupled objects. Such a flexibility / capability of misalignment avoids any damage to object due to movement on a rough / irregular surface, or the like. Further, the coupling assembly being modular in nature enables an easy disassembling and reassembling of the pieces of the object coupled. In a preferred embodiment, the apparatus includes a spindle shaped coupler and two hollow coupling rods, each coupling rod connectable to the spindle shaped coupler on one end and to one of the pieces to be coupled at the other end. It is to be understood that unless otherwise indicated this invention need not be limited to applications in coupling of furniture. As one of ordinary skill in the art would appreciate, variations of the invention may be applied to other applications such as in automobiles, health equipments, or the like. Moreover, it should be understood that embodiments of the present invention may be applied in combination with various known tools, and / or devices, to achieve any desired application. It must also be noted that, as used in this specification and the appended claims, the singular forms "a," "an" and "the" include plural referents unless the context clearly dictates otherwise. Thus, for example, the term "an opening" is intended to mean a single opening or a combination of openings, "a connecting mechanism" is intended to mean one or more connecting mechanisms, or a combination thereof.

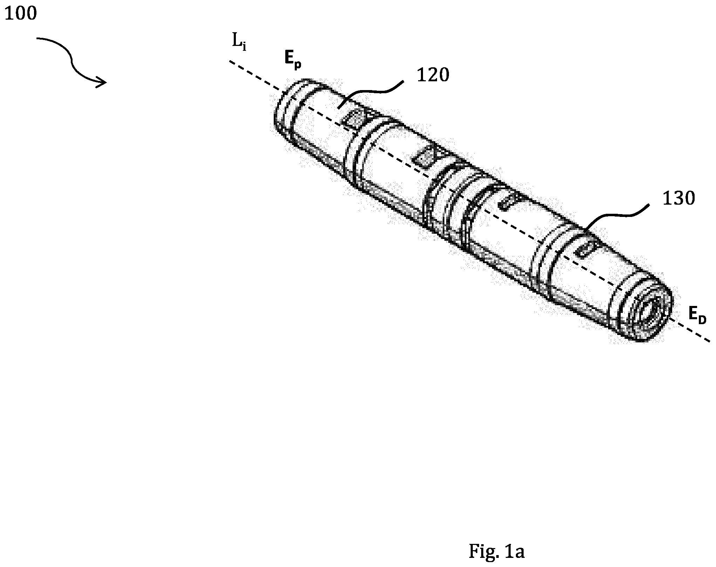

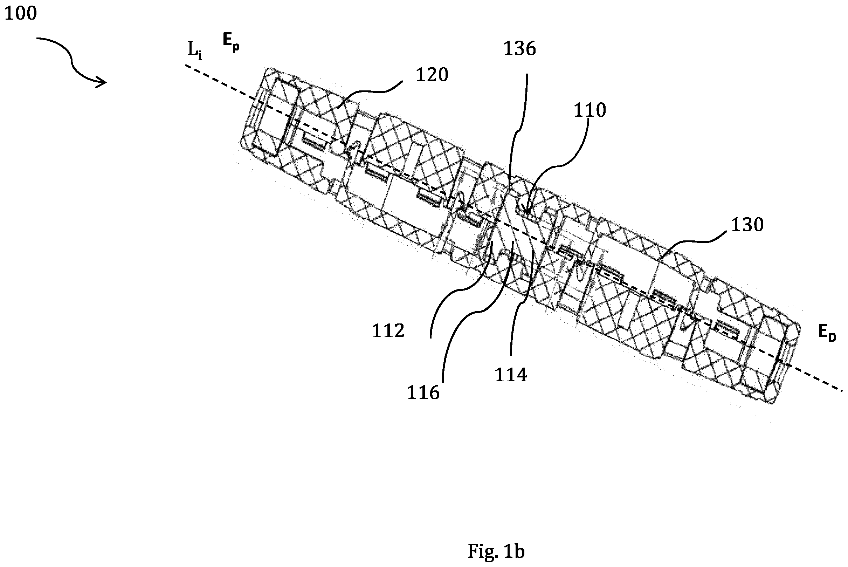

Figs. 1a and 1b illustrates a coupling assembly **100** including a spindle shaped coupler **110**, a first hollow coupling rod **120** and a second hollow coupling rod **130**. The coupler **110**, the first hollow coupling rod **120** and the second coupling rod **130** are separate modules of the coupling assembly **100** and may be attached or detached as according to the requirement. The coupler **110** comprises a first outwardly directed flange **112** at a proximal end **Eₚ** of the coupling assembly **100** radially extended towards a second outwardly directed flange **114** at a distal end **E_{d}** of the coupling assembly **100** through a generally tubular central connecting portion **116** along a longitudinal axis **Lᵢ**. The first flange **114** and the second flange **116** are configured to be connected to the first coupling rod **120** and the second coupling rod **130** respectively or vice versa, which in turn are connected to a first object (not shown) and a second object (not shown) to be coupled using the coupling assembly **100.** The connection thus formed is very much flexible and allows a misalignment to take place between the first coupling rod **120** and the second coupling rod **130**.

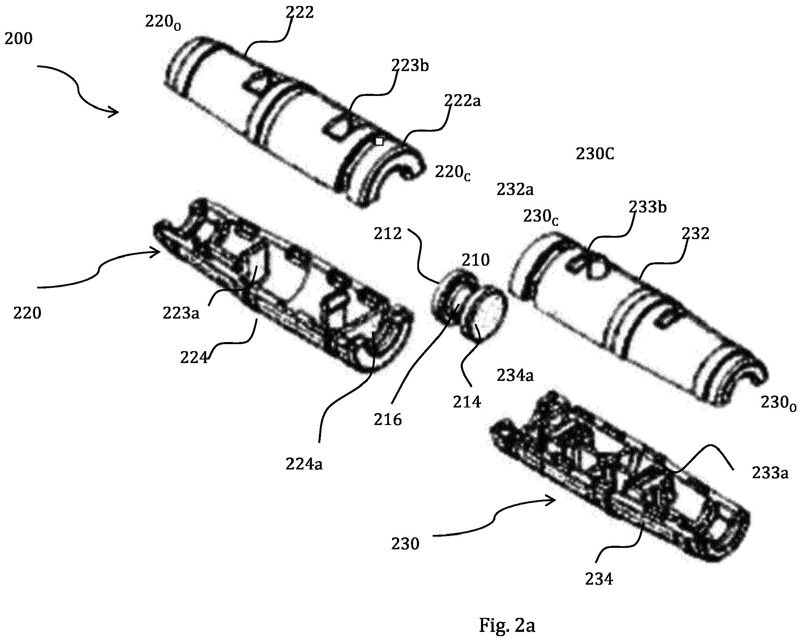

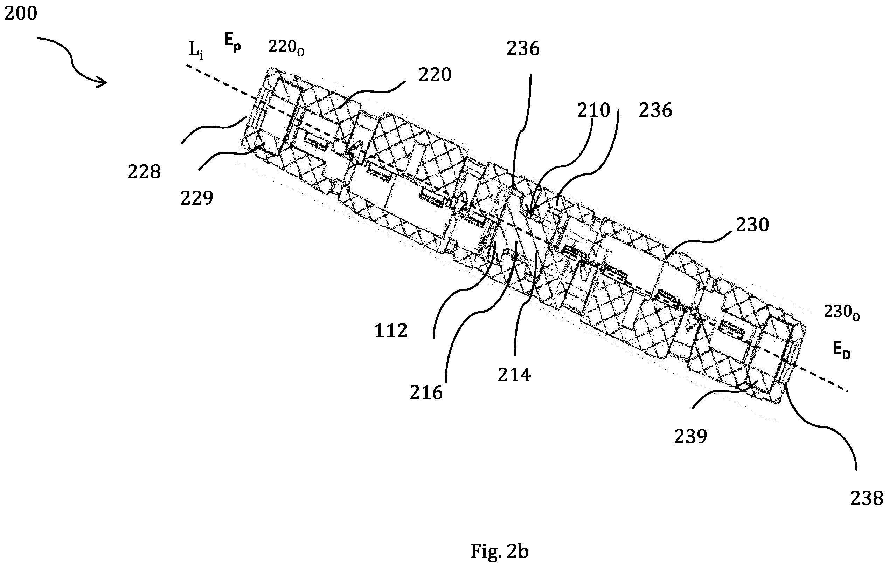

Fig. 2 illustrates a coupling assembly **200** in accordance with a preferred embodiment of the present invention. The coupling assembly **200** includes a spindle shaped coupler **210**, a first hollow coupling rod **220** and a second hollow coupling rod **230**.

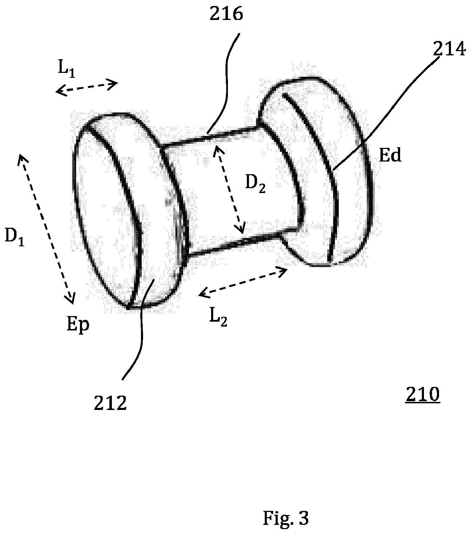

As illustrated in Fig. 3, the spindle shaped coupler **210** comprises a first outwardly directed flange **212** extending radially towards a second outwardly directed flange **214** through a central connecting portion **216**. The first flange **212** and the second flange **214** are of generally same dimensions having a generally tubular shape with a diameter **D₁** and length **L₁**. The central connecting portion **216** is of generally tubular shape having a constant diameter **D₂** across its length **L₂.** In some embodiments of the present invention, the flanges **212**, **214** may be of any other shape such as cubical, cuboidal, or the like. Accordingly the shape of the central connecting portion **216** may also vary. Further, the dimensions of the flanges **212, 214,** and the central portion **216** may be varied as per the intended application and flexibility of the coupling assembly **200**.

Preferably, the spindle shaped coupler **210** is a one piece assembly generally made of a material such as polymer. However, in some embodiments, the spindle shaped coupler **210** may be a multi-piece assembly. In such embodiments, the coupler may include a top disc connected to a bottom disc through a connecting rod, or the like. Such embodiments enables possibility in variation of the length of the coupler **210** by simply changing the length of the connecting rod. In such embodiments, the coupler **210** may be made of a metal and may be easily assembled and disassembled. In other embodiments, the coupler **210** may be made of any other suitable material known in the art.

As illustrated in fig. 2a and 2b, the first flange **212** of the coupler **210** is connectable to the first coupling rod **220** and the second flange **214** is connectable to the second coupling rod **230.** The first coupling rod **220** is a generally hollow tube having a first connecting end **220_{c}** and first cavity end **220ₒ**. Further, the first coupling rod **220** includes a first upper section **222** and a first lower section **224**. The first coupling rod **220** further includes a first locking mechanism **223** for locking the upper section **222** onto the lower section **224**. In an embodiment, as illustrated, the locking mechanism **223** is a snap-fit type locking mechanism. In such an embodiment, the first lower section **224** includes a male member **223a** and the first upper section includes a complementary groove **223b** such that when press-fitted, the first upper section **222** locks on the first lower section **224**. In other embodiments, the first locking mechanism **223** may be selected from one of but not limited to threaded screw based locking mechanism, nut-bolt based locking mechanism, notch based locking mechanism, or any other kind of locking mechanism suitable for the current application and known in the art.

The first upper section **222** includes a first inwardly directed circumferential groove **222a** and the first lower section **224** includes a first inwardly directed lower groove **224a**. The first upper section **222** and the first lower section **224** are generally of shape open semi-cylindrical such that when joined together, they forms the tubular first coupling rod **220** with a first combined groove **226** adjacent a first opening **228** at the first connecting end**220_{c}**. The first combined groove **226** (shown in fig. 2b) is of a shape complimentary to the shape of first flange **212** of the spindle shaped coupler **210**, and has a diameter **d₃** greater than the diameter **d₁** of the first flange. The first opening **228** is of a diameter **d₄** greater than the diameter **d₂** of the connecting portion of the spindle shaped coupler. **210**. Accordingly, when the first upper section **222** is locked onto the first lower section **224**, the first flange **212** is flexibly movable in a longitudinal as well as traverse direction depending upon the difference in the diameters of the first flange **212**, the first combined groove **226** and the connecting portion **216**.

The first coupling rod **220** further comprises a first connecting mechanism **229** at the cavity end **220ₒ** for connecting the first coupling rod **220** to one of the two pieces of the object to be coupled using the coupling assembly **200**. In an embodiment of the present invention, the connecting mechanism **229** comprises threaded nut and bolt assembly configured within the coupling rod and a corresponding threaded connecting cavity within the object to be connected to the coupling rod. In one such instance, the bolt is a threaded hollow connecting rod having a diameter lesser than the diameter of the first coupling rod **220** and positioned there within. Further, a nut is also positioned within the first coupling rod **220** such that the threaded hollow connecting rod may be screwed through the nut until the connecting rod is threaded within the cavity of the object to be connected.

In another embodiment of the present invention, the connecting mechanism **229** may be a snap-fit connecting mechanism. In an instance, a bolt is positioned within the coupling rod which is pressed towards within the cavity of the object to be coupled such that it gets fitted within the cavity.

In yet other embodiments, the connecting mechanism **229** may be any kind of connecting mechanism known in the art such as for example - a notch based connecting mechanism, an eccentric nut based connecting mechanism, or any other fastener based connecting mechanism suitable for connecting the first coupling rod **220** to the object to be coupled.

The second coupling rod **230** is a generally hollow tube having a second connecting end **230_{c}** and second cavity end **230ₒ**. Further, the second coupling rod **230** includes a second upper section **232** and a second lower section **234.** The second coupling rod **230** further includes a second locking mechanism **233** for locking the second upper section **232** onto the second lower section **234**. In an embodiment, as illustrated, the second locking mechanism **233** is a snap-fit type locking mechanism. In such an embodiment as illustrated in the Fig. 2, the second lower section **234** includes a male member **223a** and the second upper section **232** includes a complementary groove **223b** such that when press fitted, the second upper sections **232** locks on the second lower section **234.** In other embodiments, the second locking mechanism **233** may be same as or different from the first locking mechanism **223** and may be selected from one of but not limited to threaded screw based locking mechanism, nut-bolt based locking mechanism, notch based locking mechanism, or any other kind of locking mechanism suitable for the current application and known in the art.

The second upper section **232** includes a second inwardly directed circumferential upper groove **232a** and the second lower section **234** includes a second inwardly directed lower groove **234a**, The second upper section **232** and the second lower section **234** are generally of shape open semi-cylindrical such that when joined together, they forms the tubular second coupling rod **230** with a second combined groove **236** adjacent a second opening **238** at the second connecting end **230_{c}**. The second combined groove **236** is of a shape complimentary to the second flange **214** of the spindle shaped coupler **210** and having a diameter **d₃** greater than the diameter **d₁** of the second flange. The second opening **238** is of a diameter **d₄** greater than the diameter **d₂** of the connecting portion **216** of the spindle shaped coupler **210**. Accordingly, when the second upper section **232** is locked onto the second lower section **234**, the second flange **214** is flexibly movable in a direction along the longitudinal axis as well as in a direction along the traverse axis, depending upon the difference in the diameters of the second flange **214,** the second combined groove **236** and the connecting portion **216.**

The second coupling rod **230** further comprises a second connecting mechanism **239** at the cavity end **230ₒ** for connecting the second coupling rod **230** to one of the pieces of the object to be coupled using the coupling assembly **200**. In an embodiment of the present invention, the second connecting mechanism **239** is same as the first connecting mechanism **229** and comprises a threaded nut and bolt assembly configured within the second coupling rod **230** and a corresponding threaded connecting cavity within the piece of the object to be connected (not shown) to the second coupling rod **230**. In one such instance, the bolt is a threaded hollow connecting rod having a diameter lesser than the diameter of the second coupling rod **230** and positioned there within. Further, the nut is also positioned within the second coupling rod **230** such that the threaded connecting rod may be screwed through the nut within the cavity of the object to be connected.

In another embodiment of the present invention, the second connecting mechanism **239** may be a snap-fit connecting mechanism. In yet other embodiments, the connecting mechanism **239** may be any kind of connecting mechanism known in the art such as for example - a notch based connecting mechanism, an eccentric nut based connecting mechanism, or any other fastener based connecting mechanism suitable for connecting the coupling rod to the objects to be coupled.

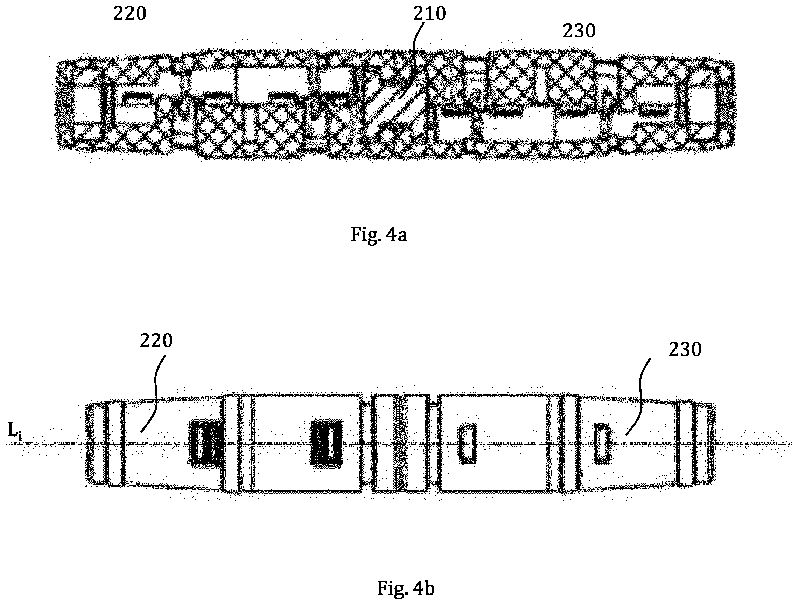

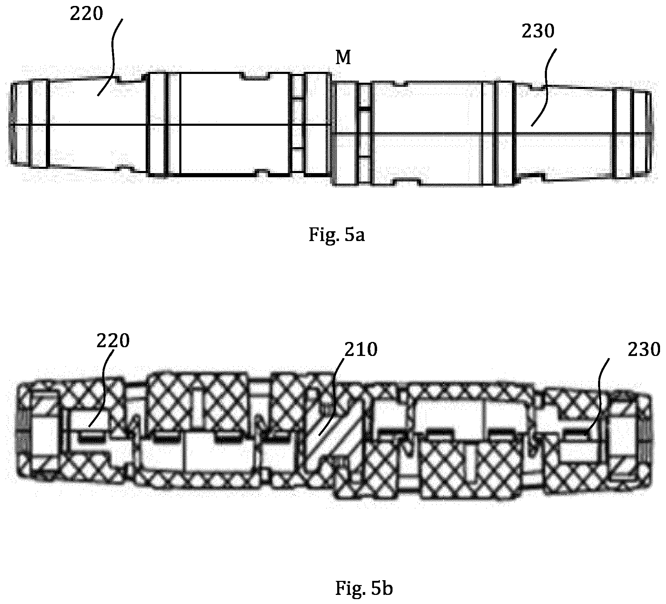

Accordingly as illustrated in fig. 4a and 4b, when the first coupling rod **220** and the second coupling rod **230** is connected to the spindle shaped coupler **210**, each of the first flange **212** and the second flange **214**, while being lockingly engaged in the direction of longitudinal axis **Lᵢ**, is able to move in a direction perpendicular to the longitudinal axis **Lᵢ**. Such a movement is possible due to the fact that the diameter of each of the combined groove **226**. **236** is greater than the diameter of the first flange **212** and the second flange **214.** Further, the diameter of the openings **228, 238** of the coupling rods **220**, **230** is more than the diameter of the connecting portion **216** of the coupler **210**. Therefore, whenever there is a sudden impact force applied on to the coupling assembly **200** due to movement on rough surface or another surface, the spindle assembly slightly gains a misalignment **M** as illustrated in Fig 5a and 5b, thereby allowing a relative movement between the coupling rods **220**, **and 230**. Such a misalignment avoids any kind of damage or destruction to the coupling assembly **200** and / or to the objects coupled.

In some embodiments, the coupling assembly **200**, including the spindle shaped coupler **210,** the first coupling rod **220** and the second coupling rod **230** may be formed of a material such as a metal, a composite material or any other material suitable to make the assembly a reusable unit, and making disassembling or reassembling possible. In other embodiments, the coupling assembly **200**, including the spindle shaped coupler **210**, the first coupling rod **220** and the second coupling rod **230,** may be used only once and in such instances, may be formed of any suitable compatible polymer such as a plastic, polyethylene, homopolymers and copolymers of vinyl acetate such as ethylene vinyl acetate copolymer, polyvinylchlorides and other suitable material known to those skilled in the art.

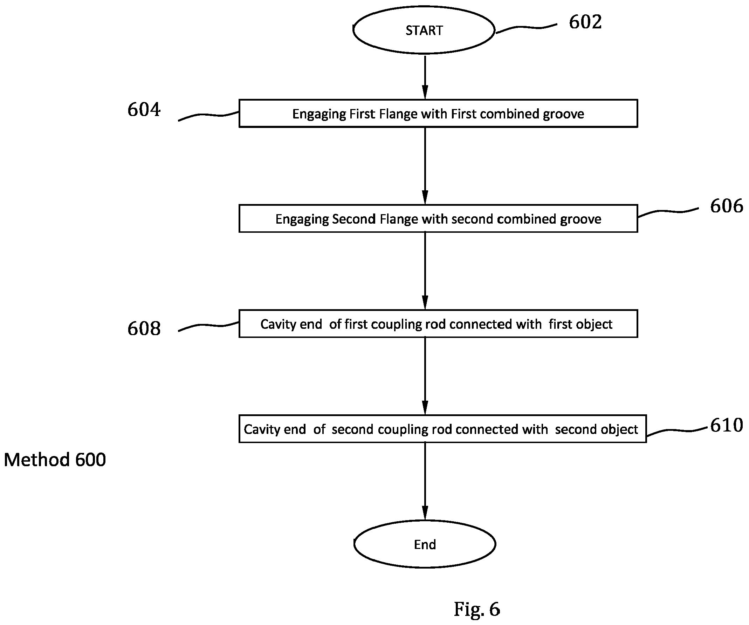

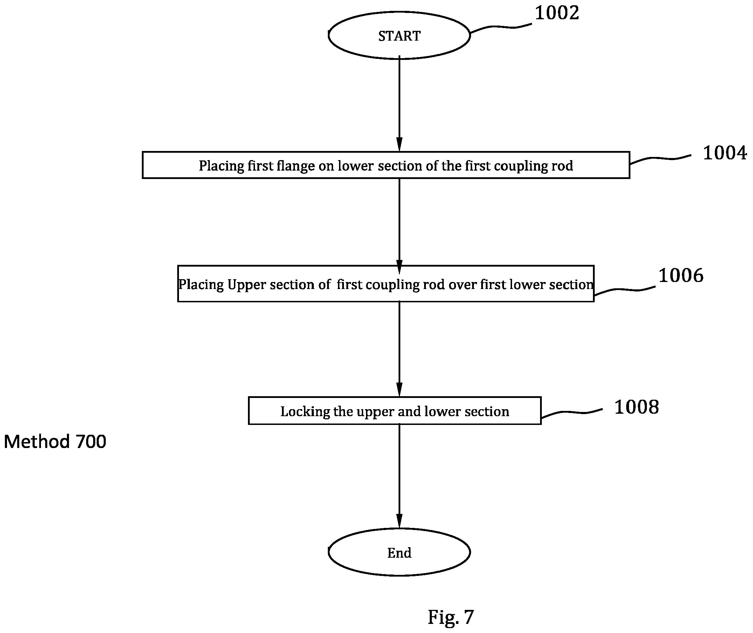

Fig. 6 with reference to Figs.1 through 5, is a flow diagram illustrating a method **600** for installing the modular coupling assembly **200** of the present invention. The method **600** starts at step **602** and moves to step **604** where the first flange **212** of the spindle shaped coupler **210** is lockingly engaged within the first combined groove **226** of the first coupling rod **220.** The step of engaging further comprising the steps as disclosed in method **700** as illustrated in Fig. 7. The method **700** starts at **702** and proceeds to step **704** where the first flange **212** of the spindle shaped coupler **210** is placed on to the first groove **224a** of the first lower section **224** of the first coupling rod **220.** Thereafter, at step **706**, the first upper section **222** is placed over the first lower section **224** and locked using first locking mechanism **223** at step **708** such that the first flange **212** of the spindle shaped coupler **210** is locking engaged with the combined groove **226** of the first coupling rod **220**.

Looping back to method **600**, the method further comprises step **606** where the second flange **214** of the spindle shaped coupler **210** is locking engaged within the second combined groove **236** of the second coupling rod **230**. The step of engaging further comprising the steps as illustrated in method **800** of fig 11. The method **800** starts at **802** and proceeds to step **804** where the second flange **214** of the spindle shaped coupler **210** is placed on to the second groove of the second lower section **234** of the second coupling rod **230.** Thereafter, at step **806**, the second upper section **232** is placed over the second lower section **234** and locked using the second locking mechanism **233** at step **808** such that the second flange **214** of the spindle shaped coupler **210** is locking engaged with the combined groove **236**.

In an embodiment of the present invention, the step **604** and **606** may be performed simultaneously. In another embodiment of the present invention, the step **604** and **606** may be performed sequentially one after the other in any desired order. Once the coupler **210** is coupled to the first coupling rod **220** as well as the second coupling rod **230** at opposite flanges **212** and **214,** the method **600** proceeds to step **608** where the first cavity end **220ₒ** of the first coupling rod **220** is connected with one of the objects to be coupled using the first connecting mechanism **229**. Similarly at step 610, the cavity end **230ₒ** of the second coupling rod **230** is connected to the other object to be coupled using the second connecting mechanism **239** to obtain a flexible connection between the two objects. Such a connection between the two objects allows a relative movement between the coupling rods **220**, **230**, and in turn allows a misalignment possible between the objects connected using the coupling assembly **220**. Such a flexibility further avoids a possibility of any damage to the coupling assembly **200** and / or the objects coupled, due to a movement on irregular surface or due to any kind of sudden impact force applied on to the objects coupled.

### INDUSTRIAL APPLICABILITY

The present disclosure relates to a flexible coupling assembly **100** for coupling two or more objects such as for example, furniture such as chairs, tables or benches or the like. Also, the coupling assembly **100** may be used for connecting various storage accessories such as shelves, cabinets or the like. Additionally, the coupling assembly **100** of the current disclosure may also be used to couple multiple pieces of various equipments such as exercising equipments, automobiles, construction units, and for various applications within many industries including particularly the transportation and logistics industries.

The flexible nature of the coupling assembly **100** enables the possibility of a limited misalignment between the coupled objects, generally caused due to movement on a rough surface, transportation on irregular surfaces, or any impact which may otherwise cause the breakage / damage to the coupling assembly and in turn to the objects coupled using the assembly.

In an embodiment of the present invention, the coupling assembly is utilized for connecting more than two objects such as for example, as illustrated in Fig, 9a and 9b. where the coupling assembly **200** of current disclosure is used for connecting three pieces **402**, **404**, **406** of a chair **400** in a row. In such an embodiment, each of the corner pieces **402**, **406** comprises a single cavity **402a**, and **406** a respectively, and the piece **404** to be coupled in the middle comprises two cavities **404a** and **404b**, each on a connecting side of the piece **404**. In such an embodiment, a first coupling assembly **410** is used to connect the piece **402** with the middle piece **404** at the cavities **402a and 404a.** Further, a second coupling assembly **420** is used to connect the piece **406** with the middle piece **404** at the cavities **404b** and **406a**. Further in such embodiments, in some instances, the cavity **404a** may be extended towards the cavity **404b** through a bore **404c.** In such embodiments, an additional hollow inner connecting rod **430** may be used to connect the two coupling assemblies **410** and **420** through the bore **404c.** Similarly, the coupling assembly **200** of the current disclosure may be used to couple any number of pieces of objects and / or objects using multiple coupling assemblies and additional inner connecting rods. Further, it is to be contemplated that the coupling assembly **200** of the current disclosure may be reproduced in any desired dimensions for each of the module including the spindle shaped coupler **210**, the first hollow coupling rod **220** and the second hollow coupling rod **230** as deemed fit for a desired application without deviating from the scope of the invention.

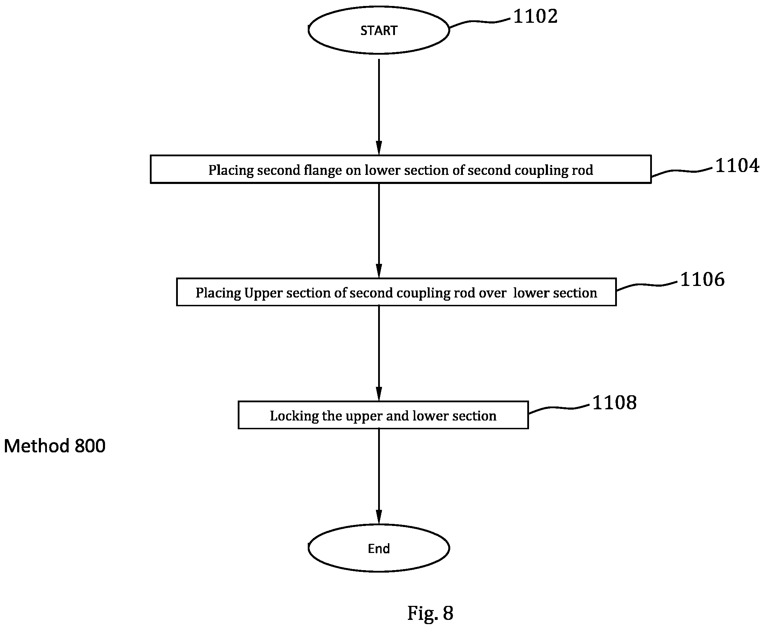

Referring to Figs. 6-8, methodology in accordance with a preferred embodiment of the claimed subject matter is illustrated. While, for purposes of simplicity of explanation, the methodology is shown and described as a series of acts, it is to be understood and appreciated that the claimed subject matter is not limited by the order of acts, as some acts may occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the claimed subject matter. Additionally, it should be further appreciated that the methodologies disclosed hereinafter and throughout this specification are capable of being stored on an article of manufacture to facilitate transporting and transferring such methodologies to computers. The term article of manufacture, as used herein, is intended to encompass a computer program accessible from any computer-readable device, carrier, or media.

## Claims

1. A coupling assembly for connecting two objects, each object comprising a connecting cavity, the coupling assembly comprising:
a spindle shaped coupler comprising a first outwardly directed flange at a proximal end radially extending towards a second outwardly directed flange at a distal end through a central connecting portion;
a first hollow coupling rod and a second hollow coupling rod, each rod comprising a connecting end and a cavity end wherein the connecting end of first rod is flexibly connectable to the first flange and the connecting end of the second rod is flexibly connectable to the second flange such that when connected the coupling rods are relatively and limited movable in a direction perpendicular to a longitudinal axis of the coupling assembly;
wherein further the cavity end of each of the coupling rods is connectable to one of the two objects at its connecting cavity.

2. The coupling assembly of claim 1, wherein each of the coupling rods comprising an upper section and a lower section, each of the upper section and the lower section comprising a inwardly directed groove adjacent the connecting end such that when the upper section and the lower section are joined, an opening at the connection end and a combined groove adjacent the opening is formed, the combined groove configured to lockingly engage one of the outwardly directed flange of the spindle shaped coupler.

3. The coupling assembly of claim 2, wherein a diameter of each of the flanges is lesser than a diameter of each of the combined grooves and greater than a diameter of opening at each of the connecting ends and whereinfurther the diameter of opening at each of the connecting end is greater than a diameter of the connecting portion of the coupler such that when connected, the first coupling rod and the second coupling rod are relatively movable to a limit equaling a difference in the diameter of the opening the connecting end and the diameter of the connecting portion.

4. The coupling assembly of claim 3, wherein each of the coupling rods comprises a locking mechanism for locking the upper section on to the lower section.

5. The coupling assembly of claim 4, wherein the locking mechanism is a snap-fit locking mechanism.

6. The coupling assembly of claim 4, wherein the locking mechanism is one of but not limited to notched based locking mechanism, threaded screw locking mechanism and any kind of fastener based locking mechanism.

7. The coupling assembly of claim 1, wherein the cavity end of each of the coupling rods comprises a connecting mechanism for connecting the coupling rod to the connecting cavity of at least one of the two objects.

8. The coupling assembly of claim 7, wherein the connecting mechanism is a threaded nut bolt assembly.

9. A flexible coupling assembly, the assembly comprising:
a spindle shaped coupler comprising a first outwardly directed flange at a proximal end radially extending towards a second outwardly directed flange at a distal end through a central connecting portion;
a first hollow coupling rod having a first connecting end and a first cavity end, the first coupling rod comprising:
a first upper section comprising a first upper groove adjacent the first connecting end;
a first lower section comprising a first lower groove adjacent the first connecting end;
a first locking mechanism for locking the first upper section on to the first lower section such that when locked together, a first combined groove is formed adjacent a first opening at the first connection end such that the first combined groove lockingly engages the first flange of the spindle shaped coupler.
a second coupling rod having a second connecting end and a second cavity end the rod comprising:
a second upper section comprising a second upper groove adjacent the second connecting end
a second lower section comprising a second lower groove adjacent the second connecting end; and
a second locking mechanism for locking the second upper section on to the second lower section such that when locked together, a second combined groove is formed adjacent a second opening at the second connection end such that the second combined groove lockingly engages the second flange of the spindle shaped coupler;
wherein a diameter of each of the flanges is lesser than a diameter of the each of the combined grooves and greater than a diameter of the opening at each of the connecting ends; wherein further the diameter of the opening at each of the connecting end is greater than a diameter of the connecting portion of the coupler such that when connected, the first coupling rod and the second coupling rod are relatively movable in a direction perpendicular to a longitudinal axis of the coupling assembly, to a limit equaling a difference in the diameter of the connecting end and the diameter of the connecting portion.

10. The coupling assembly of claim 9, wherein the first coupling rod and the second coupling rod comprises a connecting mechanism for enabling a connection with one of the objects to be coupled.

11. The coupling assembly of claim 10, wherein the connecting mechanism is a threaded nut bolt assembly.

12. The coupling assembly of claim 1, wherein the first locking mechanism and the second locking mechanism is a snap-fit locking mechanism.

13. A method for coupling two objects using the coupling assembly of aforementioned claims, the method comprising:-
Placing the first flange of the spindle shaped coupler in between the first upper section and the first lower section of the first coupling rod such that the first flange is engaged with each of the first upper groove and the first lower groove.
locking the first upper section and the first lower section such that the first flange is flexibly locked within the combined groove.
placing the second flange of the spindle shaped coupler in between the second upper section and the second lower section such that the second flange is engaged with each of the second upper groove and the second lower groove.
locking the second upper section and the second lower section such that second flange is flexibly locked within the second combined groove.

14. A method of claim 13, the method further comprising connecting each of the coupling rods to one of the objects to be coupled using a connection mechanism selected from one of but not limited to threaded nut-bolt assembly, notch based connection assembly, screw based connection assembly and any kind of fastener based connection assembly.
